# EUROPEAN PATENT APPLICATION

(11) **EP 1 484 779 A2**
(43) Date of publication of application: **08.12.2004**
(21) Application number: 04013041.1
(22) Date of filing: 02.06.2004
(51) Int. Cl.: H01H 25/04, H01H 19/00

(54) **Control device for car-mounted electric device**

(30) Priority: 04.06.2003 JP 2003159702
(71) Applicant: ALPS ELECTRIC CO., LTD., Tokyo 145-8501 (JP)
(72) Inventor: Sato, Hiroyuki c/o ALPS ELECTRIC CO.,LTD., Tokyo 145-8501 (JP)
(74) Representative: Klunker . Schmitt-Nilson . Hirsch

(57) **Abstract**

A control device for a car-mounted electric device, the control device including a rotatable operating unit and a switch-operating unit operated by an operator; a detector for detecting the operation of the operating unit; an external force generator providing the operating unit with a force-feedback; a first switch operated with the operating unit and a plurality of second switches operated with the switch-operating unit; a spring for returning the switch-operating unit to a neutral position; a plurality of regulators provided for the car-mounted electric device; and a control unit for controlling driving of the external force generator and the plurality of regulators. An operation condition to be controlled is selected by operating one of the plurality of second switches selectively. Then the selected operation condition is controlled by operating the operating unit and the first switch.

## Description

### BACKGROUND OF THE INVENTION

### 1. Field of the Invention

The present invention relates to a control device for a car-mounted electric device such as an air conditioner, a radio, and a CD player. More specifically, it relates to a control device whose operating unit operated by an operator is compact and user-friendly.

### 2. Description of the Related Art

There is disclosed a switch unit used for a car-mounted air conditioner, the switch unit including a changing member for regulating the temperature; another changing member for regulating the air flow; another changing member for selecting the air outlet; and another changing member for selecting whether the outside air is taken in, wherein at least one of the changing members is rotatable, at least one of the other changing members is slidable, and the slidable changing member is disposed so as to be slidable in a circular arc whose center is the shaft center of the rotatable changing member. This is described in, for example, Japanese Unexamined Patent Application Publication No. 2002-172925.

In this switch unit, the space required for disposing the changing members can be reduced, as compared with a switch unit in which a slidable changing member and a rotatable changing member are separated. Therefore, the switch unit for a vehicle can be compact.

The switch unit has at least one rotatable changing member and at least one slidable changing member. In the case of operating a car-mounted air conditioner, the switch unit controls operation conditions, for example, the temperature, the air flow, the air outlet, and intake of the outside air with separate changing members. Therefore, integration of the changing members is not sufficient, and there is room for improvement in terms of miniaturization and user-friendliness.

In addition, there is disclosed a force-feedback input device for a vehicle, the input device including a manual operating unit operated by an operator; a detector for detecting the state of the manual operating unit; an external force generator providing the manual operating unit with a force-feedback; and a control unit for controlling the external force generator so as to provide the manual operating unit with a predetermined force-feedback according to the state of the manual operating unit, wherein a plurality of car-mounted electric devices are operated with the single manual operating unit by providing the manual operating unit with a force-feedback unique to each electric device. This is described in, for example, Japanese Unexamined Patent Application Publication No. 2001-28222.

By using this input device, many electric devices can be operated with a single manual operating unit. Therefore, as compared with the case where the electric devices are operated separately, the operation of the electric devices is made easier, and driving of the car can be more comfortable.

In this input device, a single manual operating unit is used for selection of an electric device to be controlled, selection of an operation condition to be controlled, and control of the operation condition. Since various force-feedbacks are provided for the manual operating unit, differences between the force-feedbacks are inevitably small. Therefore, it is difficult to operate the manual operating unit without looking at it.

### SUMMARY OF THE INVENTION

It is an object of the present invention to provide a force-feedback control device for a car-mounted electric device, the control device being compact and user-friendly, and an operating unit thereof capable of being operated easily without looking at it.

In accordance with the present invention, there is provided a control device for a car-mounted electric device, the control device including a rotatable operating unit operated by an operator; a detector for detecting the operation of the operating unit; an external force generator providing the operating unit with a force-feedback; a switch-operating unit accommodating the operating unit; a plurality of switches switched with the switch-operating unit; a plurality of regulators provided for the electric device; and a control unit for outputting signals controlling driving of the external force generator and the regulators according to output signals from the detector and the switches, wherein the control unit stores the relation between the plurality of switches and regulated items of the electric device, the relation between the operation of the operating unit and the signal controlling the external force generator, and the relation between the operation of the operating unit and the signals controlling the plurality of regulators; and the control unit selects a regulated item of the electric device according to an output signal from one of the plurality of switches, and calculates a rotation angle of the operating unit according to an output signal from the detector, and according to the calculated rotation angle, outputs a signal controlling one of the plurality of regulators corresponding to the selected item so as to regulate one of operation conditions of the electric device, and another signal controlling the external force generator so as to provide the operating unit with a force-feedback corresponding to the operation condition to be regulated.

As described above, the control device has an operating unit and a switch-operating unit accommodating the operating unit. The switch-operating unit is for selection of an operation condition of a car-mounted electric device to be controlled, and the operating unit is to control the operation condition. Since the unit for selection of an operation condition and the unit to control the operation condition are integrated, the control device is improved in miniaturization and user-friendliness. In addition, since the operating unit is used for controlling a single device, the total number of operation conditions to be controlled is small as compared with the case where an operating unit is used for controlling a plurality of devices. Therefore, differences between the force-feedbacks provided for the operating unit according to the operation conditions to be controlled can be large, and it is easy to operate the operating unit without looking at it.

The operating unit may be a sphere, and the switch-operating unit may be a spherical shell accommodating the operating unit.

In this case, the operating unit can be rolled just like a trackball on a personal computer. Therefore, operation conditions of the car-mounted electric device are controlled easily with the operating unit.

The operating unit may be a disk, and the switch-operating unit may be a disk holder accommodating the operating unit.

In this case, the operating unit and the switch-operating unit are small as compared with the case where the operating unit is a sphere, and the switch-operating unit is a spherical shell accommodating the sphere. Therefore, the control device is further miniaturized.

The operating unit may be capable of being pushed against the inner wall of the switch-operating unit, and the control device may further include another switch disposed between the operating unit and the inner wall of the switch-operating unit, the switch being used for finalizing the regulation performed by operating the operating unit.

In this case, operation conditions of the car-mounted electric device are not controlled by the operating unit's rotation alone. Not until the finalizing switch is on are the operation conditions controlled. Therefore, the operating unit is not provided with any unwanted force-feedbacks. Since the operating unit is provided only with the force-feedback corresponding to the operation condition to be controlled, it is easy to grasp what is being controlled without looking at the operating unit.

### BRIEF DESCRIPTION OF THE DRAWINGS

FIG. 1 is an illustration of a control device of an embodiment;
FIG. 2 is a sectional view showing the main part of the control device installed in a car-mounted air conditioner;
FIG. 3 is a sectional view showing the relationship among a case, a switch-operating unit, and switches of the control device;
FIG. 4 is an illustration of how to operate the control device;
FIGS. 5A to 5C are diagrams showing the patterns of force-feedback stored in a control unit of the control device;
FIG. 6 is a flow chart showing the operating procedure of the control device.
FIG. 7 is a perspective view of the main part of a control unit of another embodiment; and
FIG. 8 is a perspective view of the main part of a control unit of another embodiment.

### DESCRIPTION OF THE PREFERRED EMBODIMENTS

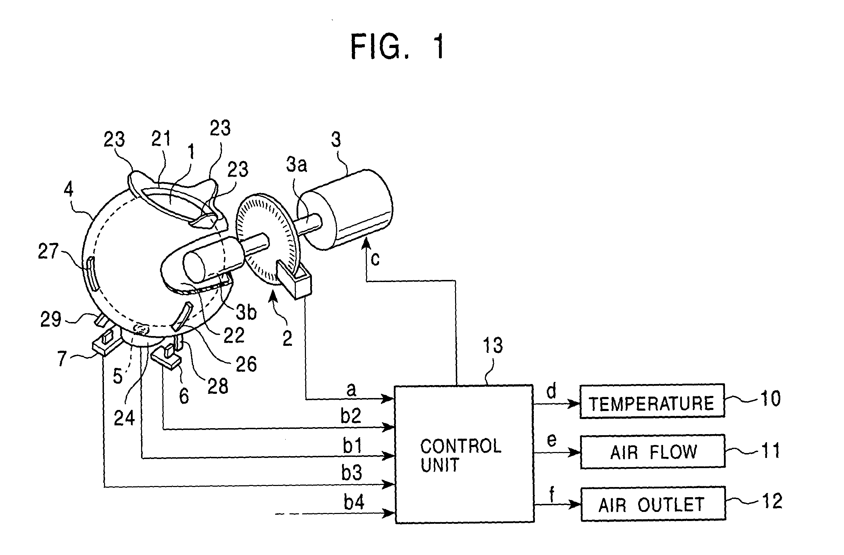

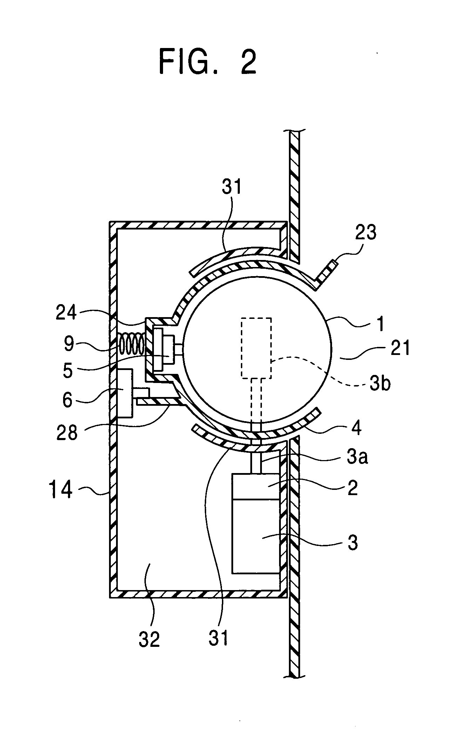

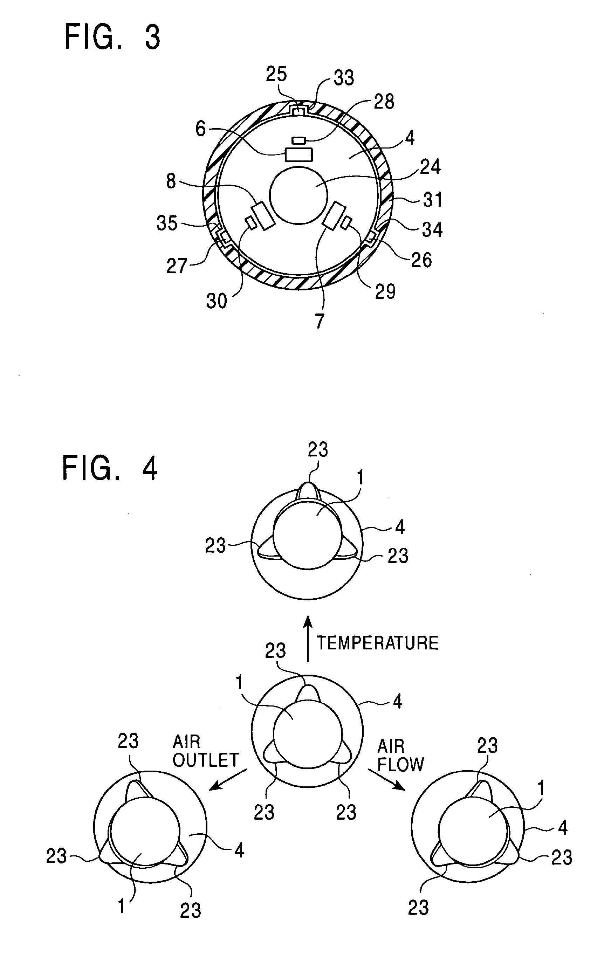

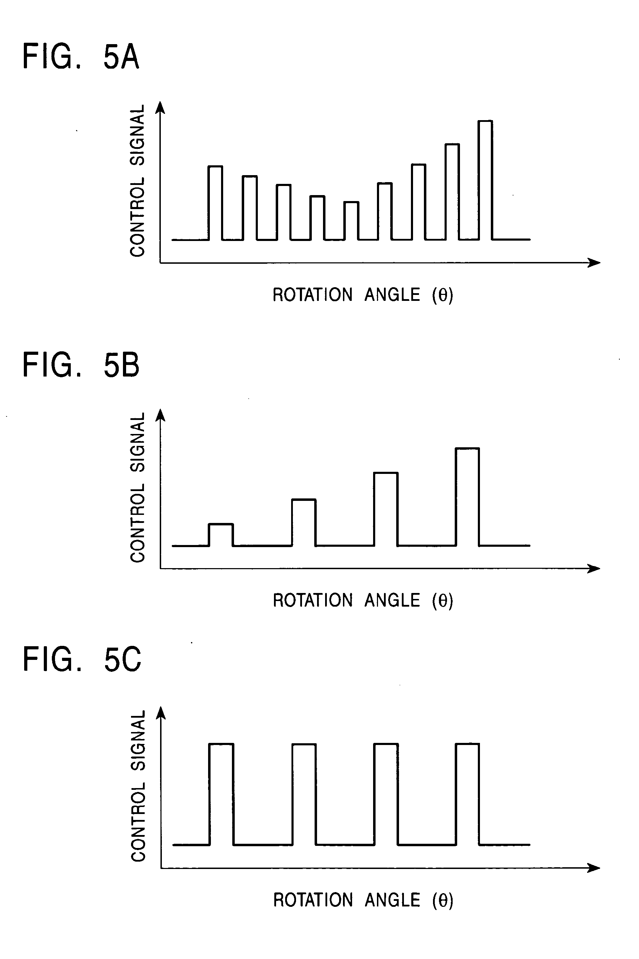

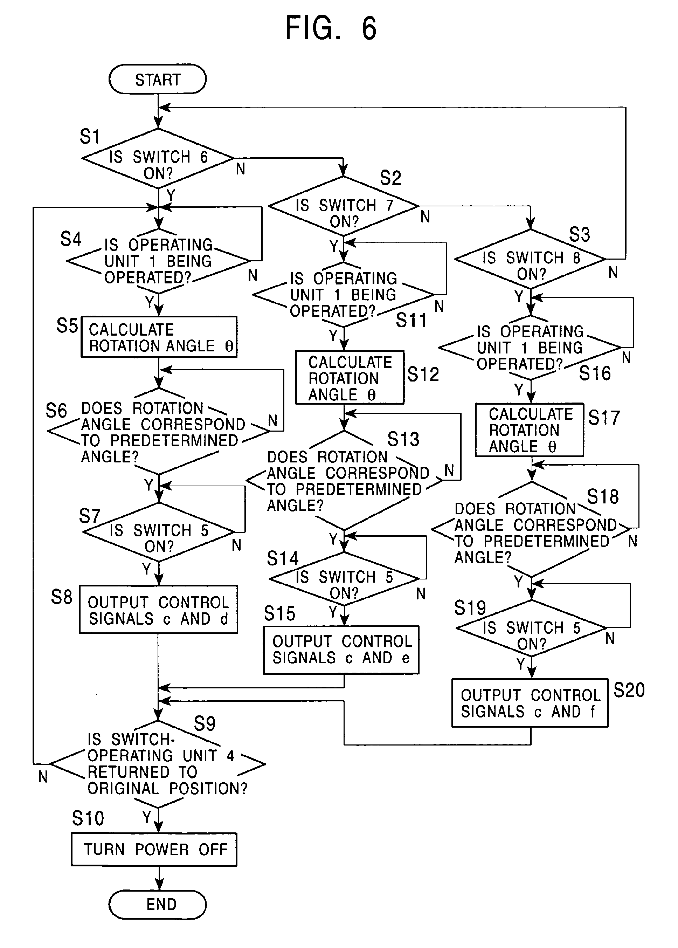

A control device embodying the present invention will be described with reference to FIGS. 1 to 6. This is a control device for a car-mounted air conditioner. FIG. 1 is an illustration of the control device. FIG. 2 is a sectional view showing the main part of the control device installed in a car-mounted air conditioner. FIG. 3 is a sectional view showing the relationship among a case, a switch-operating unit, and switches of the control device. FIG. 4 is an illustration of how to operate the control device. FIGS. 5A to 5C are diagrams showing the patterns of force-feedback stored in a control unit of the control device. FIG. 6 is a flow chart showing the operating procedure of the control device.

As shown in FIGS. 1 to 3, the control device is composed mainly of a rotatable operating unit 1 operated by an operator; a detector 2 for detecting the operation of the operating unit 1; an external force generator 3 providing the operating unit 1 with a force-feedback; a switch-operating unit 4 accommodating the operating unit 1 and operated by the operator; a switch 5 switched with the operating unit 1; a plurality of (three as shown in FIG. 3) switches 6, 7, and 8 switched with the switch-operating unit 4; a spring 9 for returning the switch-operating unit 4 from the operated state to a predetermined neutral position; a plurality of (three as shown in FIG. 1) regulators 10, 11, and 12 provided for an air conditioner; a control unit 13 for controlling the external force generator 3 to provide the operating unit 1 with a predetermined force-feedback corresponding to the rotated angle of the operating unit 1, and controlling the regulators 10, 11, and 12 to regulate operation conditions of the air conditioner according to the states of the operating unit 1 and the switch-operating unit 4; and a case 14 accommodating these components.

As shown in FIGS. 1 and 2, the operating unit 1 is a sphere and rotatably accommodated by the switch-operating unit 4, which is a spherical shell. It is desirable to process the surface of the operating unit 1 in order to prevent a friction roller 3b from slipping.

As shown in FIGS. 1, 2, and 4, the switch-operating unit 4 has a first opening 21 for exposing the operating unit 1, and a second opening 22 for connecting the operating unit 1 with the detector 2 and the external force generator 3 via the friction roller 3b. On the edge of the first opening 21, projections 23 are formed so that the operator can push one of them with his or her finger. At the bottom of the switch-operating unit 4, a switch-accommodating portion 24 is formed as shown in FIGS. 2 and 3. The switch-accommodating portion 24 accommodates a switch 5 switched by pushing the operating unit 1. The switch 5 is used for finalizing the regulation performed by rotating the operating unit 1. The switch 5 may be a push switch. On the outer surface of the switch-operating unit 4, as shown in FIG. 3, three ridges 25, 26, and 27 are disposed at regular intervals for restricting the direction of movement of the switch-operating unit 4 in the case 14. In addition, on the outer surface of the switch-operating unit 4, as shown in FIG. 3, three switching projections 28, 29, and 30 are disposed at regular intervals for switching the switches 6, 7, and 8, respectively. The switch-operating unit 4 may be composed of a plurality of members in order to accommodate the operating unit 1.

The case 14 is composed of a holding portion 31 for holding the switch-operating unit 4, and an accommodating portion 32 for accommodating the other components. On the inner surface of the holding portion 31, as shown in FIG. 3, guide grooves 33, 34, and 35 are formed. The ridges 25, 26, and 27 slide in the guide grooves 33, 34, and 35, respectively, and are guided in predetermined directions. The switch-operating unit 4 is slidably fitted to the case 14 by fitting the ridges 25, 26, and 27 into the guide grooves 33, 34, and 35, respectively. The switches 6, 7, and 8 are disposed at the bottom of the accommodating portion 32. When the switch-operating unit 4 is slid, the switches 6, 7, and 8 are switched separately by the switching projections 28, 29, and 30, respectively. The switches 6, 7, and 8 switch the operation condition of the car-mounted air conditioner to be controlled by rotating the operating unit 1 to "temperature", "air flow", and "air outlet", respectively. The switches 6, 7, and 8 may be seesaw switches. The spring 9 is disposed between the bottom of the accommodating portion 32 and the switch-accommodating portion 24. The spring 9 holds the switch-operating unit 4 in the neutral position where all of the switches 6, 7, and 8 are separated from the switching projections 28, 29, and 30.

The detector 2 converts the rotation angle and the rotation direction of the operating unit 1 into an electric signal and outputs it. The detector 2 may be an encoder that can output a two-phase pulse signal or a variable resistor. A rotating part such as a code disk is fitted to the drive shaft 3a of the external force generator 3.

The external force generator 3 provides the operating unit 1 with a predetermined force-feedback via the friction roller 3b provided at the end of the drive shaft 3a. The external force generator 3 may be a rotational motor. The friction roller 3b is in contact with the surface of the operating unit 1 through the second opening 22. The second opening 22 is shaped so that the friction roller 3b can keep in contact with the operating unit 1 when the switch-operating unit 4 is slid. The external force generator 3 may be an actuator such as a linear motor and a solenoid instead of a rotational motor. In this case, a power transmission mechanism is disposed between the drive shaft 3a and the external force generator 3. The power transmission mechanism converts the linear drive of the external force generator 3 into the rotational drive and transmits the rotational drive to the drive shaft 3a.

The regulators 10, 11, and 12 are for regulating temperature, air flow, and air outlet of the car-mounted air conditioner. According to the operation condition to be regulated, a necessary actuator such as a rotational motor, a linear motor, and a solenoid is used.

The control unit 13 receives a position signal a output from the detector 2 and switch signals b1, b2, b3, and b4 output from the switches 5, 6, 7, and 8, respectively, and supplies control signals c, d, e, and f to the external force generator 3 and the regulators 10, 11, and 12, respectively. The control unit 13 stores the relation between a rotation angle θ of the operating unit 1 and the control signal c to be supplied to the external force generator 3, and the relation between the rotation angle θ of the operating unit 1 and the control signals d, e, and f to be supplied to the regulators 10, 11, and 12, respectively. When the operating unit 1 is operated and the switch 5 is switched on, the control unit 13 calculates the rotation angle θ of the operating unit 1 from the reference position according to a position signal a output from the detector 2, and then, according to the calculated rotation angle θ of the operating unit 1, outputs one of the control signals d, e, and f to one of the regulators 10, 11, and 12 so as to regulate one of the operation conditions of the car-mounted air conditioner, and outputs another control signal c to the external force generator 3 so as to provide the operating unit 1 with a force-feedback corresponding to the operation condition to be regulated.

FIGS. 5A to 5C show the relation between the rotation angle θ of the operating unit 1 and the control signal c supplied to the external force generator 3. FIG. 5A shows the case where the switch 6 is on and the temperature control is selected. FIG. 5B shows the case where the switch 7 is on and the air flow control is selected. FIG. 5C shows the case where the switch 8 is on and the air outlet control is selected. As is clear from these figures, the control signal c is output in different modes according to the states of the switches 6, 7, and 8. If necessary, any output modes of the control signal c may be set. However, it is desirable to provide a force-feedback suggestive of the operation condition to be regulated. In this embodiment, based on this viewpoint, in the case where the switch 6 is on and the temperature control is selected, the level of the control signal c is lowest at 25°C and increases with the increase and decrease of temperature. The rate of increase of the level of the control signal c under 25°C is lower than that over 25°C. In the case where the switch 7 is on and the air flow control is selected, the level of the control signal c increases with the increase of air flow. In the case where the switch 8 is on and the air outlet control is selected, the same level of control signals c are output at predetermined intervals.

The operating procedure of the control device will now be described with reference to FIG. 6.

When the system is started, determine which of the switches 6, 7, and 8 is switched on by the switch-operating unit 4 (steps S1 to S3). In the case where the switch 6 is on, go to step S4 and determine whether the operating unit 1 is being operated. In the case where the operating unit 1 is being operated in step S4, the control unit 13 repeatedly calculates the rotation angle θ of the operating unit 1 based on the position signal a output from the detector 2 (step S5). If the rotation angle of the operating unit 1 reaches the output timing of the control signal c stored in the control unit 13 (step S6), and if the switch 5 is on (step S7), the control unit 13 outputs necessary control signals c and d to the external force generator 3 and the regulator 10, respectively, based on the stored relation of FIG. 5A (step S8). If the operator takes his or her hand off the operating unit 1 after the termination of regulation, and if the switch-operating unit 4 is returned to the original position by the spring 9 (step S9), the power to the control device is turned off (step S10), thereby preventing wasteful power consumption.

In the case where the switch 7 is on in step S2, go to step S11 and determine whether the operating unit 1 is being operated. In the case where the operating unit 1 is being operated in step S11, the control unit 13 repeatedly calculates the rotation angle θ of the operating unit 1 based on the position signal a output from the detector 2 (step S12). If the rotation angle of the operating unit 1 reaches the output timing of the control signal c stored in the control unit 13 (step S13), and if the switch 5 is on (step S14), the control unit 13 outputs necessary control signals c and e to the external force generator 3 and the regulator 11, respectively, based on the stored relation of FIG. 5B (step S15), and go to step S9.

In the case where the switch 8 is on in step S3, go to step S16 and determine whether the operating unit 1 is being operated. In the case where the operating unit 1 is being operated in step S16, the control unit 13 repeatedly calculates the rotation angle θ of the operating unit 1 based on the position signal a output from the detector 2 (step S17). If the rotation angle of the operating unit 1 reaches the output timing of the control signal c stored in the control unit 13 (step S18), and if the switch 5 is on (step S19), the control unit 13 outputs necessary control signals c and f to the external force generator 3 and the regulator 11, respectively, based on the stored relation of FIG. 5C (step S20), and go to step S9.

The control device has an operating unit 1 and a switch-operating unit 4 accommodating the operating unit 1. The switch-operating unit 4 is for selection of an operation condition of the car-mounted air conditioner to be controlled, and the operating unit 1 is to control the operation condition. Since the unit for selection of an operation condition and the unit to control the operation condition are integrated, the control device is improved in miniaturization and user-friendliness. In addition, since'the operating unit is used for controlling a single device, the total number of operation conditions to be controlled is small as compared with the case where an operating unit is used for controlling a plurality of devices. Therefore, differences between the force-feedbacks provided for the operating unit according to the operation conditions to be controlled can be large, and it is easy to operate the operating unit without looking at it.

Since the operating unit 1 is a sphere, the operating device can be operated just like a trackball on a personal computer. Therefore, operation conditions of the car-mounted air conditioner are controlled easily.

The control device includes the switch 5 disposed between the switch-operating unit 4 and the operating unit 1, the switch 5 finalizing the regulation. Therefore, the operation conditions of the car-mounted air conditioner are not controlled by the operating unit's rotation alone. Not until the switch 5 is on are the operation conditions controlled. Therefore, the operating unit 1 is not provided with any unwanted force-feedbacks. Since the operating unit 1 is provided only with the force-feedback corresponding to the operation condition to be controlled, it is easy to grasp what is being controlled without looking at the operating unit 1.

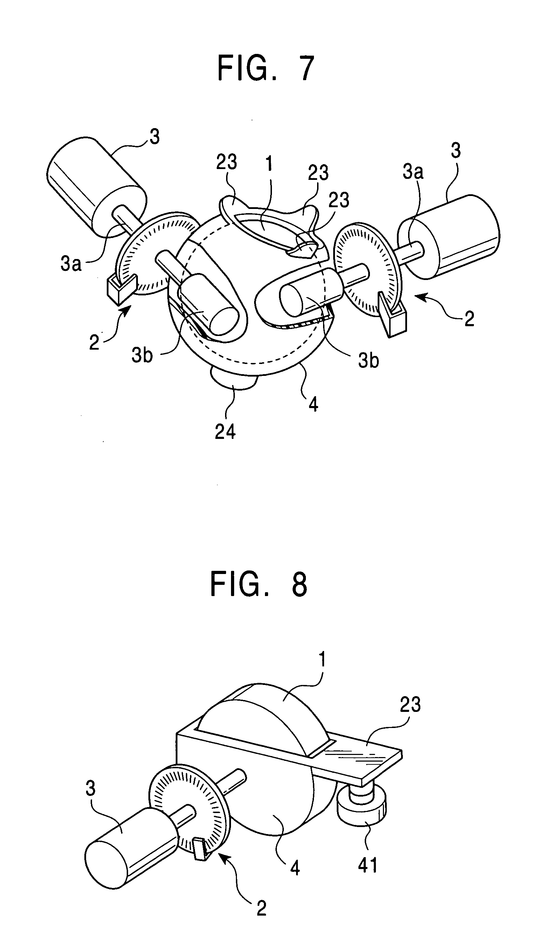

The above embodiment has a single set of the detector 2, the external force generator 3, and the friction roller 3b, however, the present invention is not limited to this. As shown in FIG. 7, two sets of detectors 2, external force generators 3, and friction rollers 3b may be disposed perpendicularly to each other so as to detect rotation angles in the two directions perpendicular to each other by the two detectors 2, and to provide the spherical operating unit 1 with external force from the two directions perpendicular to each other. In this case, the rotation direction and the rotation angle of the spherical operating unit 1 can be detected more accurately, and the spherical operating unit 1 can be provided with a force-feedback according to the rotation angle thereof more accurately. Therefore, the control device becomes more sophisticated.

In the above embodiment, the operating unit 1 is a sphere, and the switch-operating unit 4 is a spherical shell. However, the present invention is not limited to this. As shown in FIG. 8, an operating unit 1 may be a disk, and a switch-operating unit 4 may be a disk holder accommodating the operating unit 1. In this embodiment, a multistage switch 41 may be used as a switch for selecting an operation condition. The multistage switch 41 can be switched in many stages with a single projection 23. If a operating unit 1 is a disk and a switch-operating unit 4 is a disk holder as in this embodiment, the sizes of the operating unit 1 and the switch-operating unit 4 are small as compared with the case where a operating unit 1 is a sphere and a switch-operating unit 4 is a spherical shell, therefore, the control device becomes more compact.

## Claims

1. A control device for a car-mounted electric device, the control device comprising:
a rotatable operating unit operated by an operator;
a detector for detecting the operation of the operating unit;
an external force generator providing the operating unit with a force-feedback;
a switch-operating unit accommodating the operating unit;
a plurality of switches switched with the switch-operating unit;
a plurality of regulators provided for the electric device; and
a control unit for outputting signals controlling driving of the external force generator and the regulators according to output signals from the detector and the switches,
wherein the control unit stores the relation between the plurality of switches and regulated items of the electric device, the relation between the operation of the operating unit and the signal controlling the external force generator, and the relation between the operation of the operating unit and the signals controlling the plurality of regulators; and
the control unit selects a regulated item of the electric device according to an output signal from one of the plurality of switches, and calculates a rotation angle of the operating unit according to an output signal from the detector, and according to the calculated rotation angle, outputs a signal controlling one of the plurality of regulators corresponding to the selected item so as to regulate one of operation conditions of the electric device, and another signal controlling the external force generator so as to provide the operating unit with a force-feedback corresponding to the operation condition to be regulated.

2. The control device according to Claim 1, wherein the operating unit is a sphere, and,the switch-operating unit is a spherical shell accommodating the operating unit.

3. The control device according to Claim 1, wherein the operating unit is a disk, and the switch-operating unit is a disk holder accommodating the operating unit.

4. The control device according to any of Claims 1 to 3, wherein the operating unit is capable of being pushed against the inner wall of the switch-operating unit, and the control device further comprises another switch disposed between the operating unit and the inner wall of the switch-operating unit, the switch being used for finalizing the regulation performed by operating the operating unit.
